Europäisches Patentamt

(19) European Patent Office

Office européen des brevets

(11) Publication number : **0 340 308 B1**

(12) **EUROPEAN PATENT SPECIFICATION**

(45) Date of publication of patent specification :
19.08.92 Bulletin 92/34

(51) Int. Cl.⁵ : **B23H 7/06**, B23H 7/08

(21) Application number : **88908379.6**

(22) Date of filing : **28.09.88**

(86) International application number :
**PCT/JP88/00991**

(87) International publication number :
**WO 89/03742 05.05.89 Gazette 89/10**

(54) **LARGE TAPER MACHINING METHOD USING WIRE ELECTRIC DISCHARGE MACHINE.**

(30) Priority : **30.10.87 JP 273458/87**

(43) Date of publication of application :
**08.11.89 Bulletin 89/45**

(45) Publication of the grant of the patent :
**19.08.92 Bulletin 92/34**

(84) Designated Contracting States :
**CH DE FR GB IT LI**

(56) References cited :
**JP-A- 5 467 519
JP-A- 5 691 308
JP-A-56 500 405
JP-B- 6 240 126
Inoue Satoshi et.al. (Iwanami Rikagaku Jiten)
Zoteiban, 15 January 1961, Iwanami Shoten
Publishers, p. 678**

(73) Proprietor : **FANUC LTD.
3580, Shibokusa Aza-Komanba, Oshino-mura
Minamitsuru-gun, Yamanashi 401-05 (JP)**

(72) Inventor : **OBARA, Haruki
569, Takayashiki Toyama-shi
Toyama 939 (JP)**
Inventor : **TAKASHIMA, Hidenori Fanuc Dai-3
Vira-karamatsu
3527-1, Shibokusa Oshino-mura
Minamitsuru-gun
Yamanashi 401-05 (JP)**

(74) Representative : **Billington, Lawrence Emlyn et
al
HASELTINE LAKE & CO Hazlitt House 28
Southampton Buildings Chancery Lane
London WC2A 1AT (GB)**

## Description

The present invention relates to a large taper cutting method according to the preamble of claim 1. Such a method is known, for example, from JP-A-58-28424.

A wire electric discharge machine is arranged so that a table with a workpiece fixed thereon is driven in the directions of two axes, X- and Y-axes, and at least one of an upper wire guide and a lower wire guide is driven around one axis of rotation or in the directions of two axes, U- and V-axes. In normal cutting other than taper cutting, the table is driven in the X- and Y-axis direction in a manner such that the upper and lower wire guides are positioned in alignment with each other so that a wire electrode extends at right angles to the workpiece between the two wire guides. In taper cutting, on the other hand, the table is driven while the upper wire guide, for example, is driven in the U- and V-axis directions so that the wire electrode is inclined with respect to the workpiece between the upper and lower wire guides. An example of taper cutting is disclosed in US-A-4,434,896, while a particular form of electrode material is disclosed in US-A-4,424,432.

In US-A-4,431,896 the upper and lower wire guide heads pivot to allow for the slope angle of the wire electrode. In cases where these heads do not pivot, in order to prevent the wire electrode and the two wire guides from interfering with one another, an outlet of the upper wire guide and an inlet of the lower wire guide are arcuately shaped, as discloses for example in JP-A-58-28424. On account of structural restrictions, the radius of curvature of the shape is set to 10 mm or less.

Conventionally, one and the same wire electrode is used in both normal cutting and taper cutting, and a wire electrode with a tensile strength of about 50 kg/mm² is used for particular reasons, e.g., in order to obtain a required cutting speed.

If the wire electrode of this type is used, however, the wire electrode undergoes elastic deformation and plastic deformation when it bends at wire supporting portions and arcuate portions of the upper and lower wire guides during taper cutting in which the wire electrode extends obliquely between the individual wire guides, especially when the wire electrode substantially bends into an arcuate form during large-taper cutting for a taper angle of 20° or more. In such a case, although the wire electrode passed through the supporting portion and the arcuate portion of the upper wire guide ought to be stretched straight between the upper and lower wire guides, the wire electrode cannot form a straight portion with a predetermined taper angle between the upper and lower wire guides, since the stress of the elastic component of the wire electrode is great when the wire electrode is transformed from the arcuate state, at the wire supporting portion and the arcuate state, at the wire supporting portion and the arcuate portion of the upper wire guide, into a straight state at a position on the lower-course side of the region for arcuate state. Since the degree of this unstraightness of the wire electrode varies as the wire travels, moreover, the wire electrode vibrates during the electric discharge machining, thus failing to enjoy stable machining, so that the accuracy of the taper shape and the cutting surface roughness are deteriorated.

Accordingly, the object of the present invention is to provide in such cases a cutting method in which large-taper cutting for a taper angle of 20° or more can be effected with stability and high accuracy, and the cutting surface roughness can be improved.

According to the present invention there is provided a large-taper cutting method using a wire electric discharge machine wherein the taper angle is 20° or more and the electrode wire extends between two opposed wire guides the relative positions of which define said taper angle, and the wire guides have wire supporting portions with arcuate wire bending portions about which the electrode wire bends at the wire guides at either end of a substantially straight portion, of the electrode wire, which extends between the wire guides, characterised in that the electrode wire is a soft electrode wire which has a tensile strength in the range 37 kg/mm² to 46 kg/mm², and which is made of brass composed of substantially 63% to 67% Cu, with substantially the remainder being Zn.

Thus, according to the present invention, since the large-taper cutting is effected with use of the soft wire electrode having the tensile strength of 46 kg/mm² or less, the wire electrode easily bends at the wire supporting portion of the wire guides, so that the linearity of the wire electrode between the upper and lower wire guides can be maintained, and high-accuracy taper cutting can be effected. Even though the wire electrode is substantially bent for large-taper cutting at the wire supporting portions of the wire guides, moreover, the soft wire electrode is easily plastically deformed into a straight form thereafter. Accordingly, the wire electrode itself, delivered to an electric discharge machining section via the wire guide portion, is not subject to windings or the like, and its linearity is maintained. Thus, the machining voltage and current, and therefore, the electric discharge machining, are stable, and there is no possibility of the wire electrode's snapping or the like. Since the linearity of the wire electrode is maintained, furthermore, the roughness of the cutting surface can be improved, that is, the smoothness of the cutting surface can be increased.

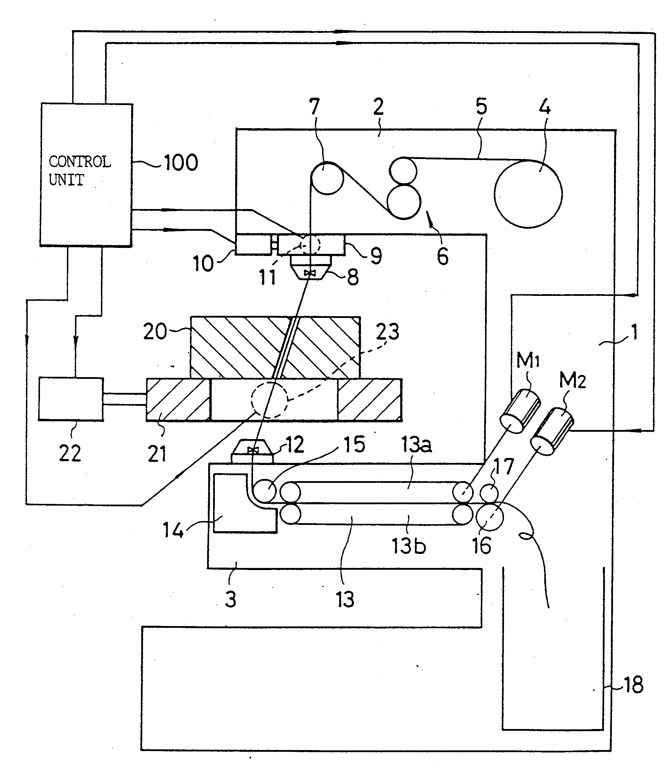

## Brief Description of the Drawing

The drawing is a schematic view of a wire electric discharge machine for effecting a large-taper cutting method according to the present invention.

Referring to the accompanying drawing, a wire electric discharge machine comprises an upright column 1 and upper and lower arms 2 and 3 extending horizontally from one side of the column. A wire supply bobbin 4 is disposed at the upper portion of the column 1, and a brake gear 6 and a guide roller 7 are provided on the upper arm 2. A UV-axis unit 9 for driving an upper wire guide 8 in the directions of U- and V-axes is attached to the distal end of the upper arm 2. The UV-axis unit 9 is arranged to be driven by means of a U-axis drive section 10 and a V-axis drive section 11. A lower wire guide 12 is fixed to the distal end of the lower arm 3. Disposed inside the lower arm 3 are a guide member 14, a guide roller 15, and a belt conveyor system 13. The guide member 14 and the guide roller 15 serve to guide a wire electrode 5 to the belt conveyor system 13, in cooperation with each other, while the belt conveyor system 13 serves to transport the wire electrode 5 in a manner such that the electrode is held between upper and lower belt conveyor sections 13a and 13b. Arranged at the outlet of the belt conveyor system 13 are a wire driving roller 16 and a pinch roller 17 adapted to be pressed against the roller 16. A wire recovery box 18 is located below the wire driving roller 16 and the pinch roller 17.

A table 21 for fixing a workpiece 20 is disposed between the upper and lower wire guides 8 and 12. The table 21 is arranged to be driven in the directions of X- and Y-axes, which extend at right angles to each other, by means of an X-axis drive section 22 and a Y-axis drive section 23.

Symbols M1 and M2 designate motors for driving the belt conveyor system 13 and the wire driving roller 16, respectively. Numerals 100 designates a control unit, e.g., a numerical control unit, which is connected in control relation with the elements 10, 11, 22, 23, M1 and M2.

In the arrangement described above, the wire electrode 5 is delivered from the wire supply bobbin 4 to be passed between a brake roller and a pinch roller of the brake gear 6, and is then brought to the region between the guide member 14 and the guide roller 15 via the guide roller 7 and the upper and lower wire guides 8 and 12. Further, the wire electrode 5 is transported by means of the belt conveyor system 13, which is driven by the motor M1, to be passed between the wire driving roller 16 and the pinch roller 17, and is then received by the wire recovery box 18. During the wire electrode transportation, tension is applied to the wire electrode 5 by the wire drive by means of the belt conveyor system 13 and the wire driving roller 16 and by the braking action of the brake gear 6.

In performing normal electric discharge machining other than taper cutting, voltage is applied between the wire electrode 5 and the workpiece 20 to effect electric discharge, while driving the motors M1 and M2 to run the wire 5 along the wire transportation path mentioned above in the aforesaid manner, and driving the X- and Y-axis drive sections 22 and 23 to move the table 21. In performing the taper cutting, the U- and V-axis drive sections 10 and 11 are also driven so that the upper wire guide 8 is moved relatively to the lower wire guide 12 by means of the UV-axis unit 9, whereby the wire electrode 5 between the upper and lower wire guides 8 and 12 is inclined.

In performing the normal electric discharge machining and electric discharge machining including only taper cutting for a taper angle of less than 20°, a hard electrode wire for electric discharge machining, having a tensile strength of, e.g. about 50 kg/mm², is used for the wire electrode 5. In performing electric discharge machining including large-taper cutting for a taper angle of 20° or more, on the other hand, a soft electrode wire for electric discharge machining, preferably a brass wire, having a tensile strength of 46 kg/mm² or less, is used for the wire electrode 5. For reasons related to the production of the electrode wire, the lower limit value of the tensile strength of the soft electrode wire is 37 kg/mm². The soft electrode wire is composed of 63 % to 67 % Cu, 0.07 % or less Pb, 0.05 % or less Fe, and Zn for the remainder. The elongation of the soft electrode wire, one of the mechanical properties thereof, is 15 % or more if the tensile strength ranges from 42 to 46 kg/mm².

During the large-taper cutting, the wire electrode 5 substantially bends at those supporting portions (not shown) of the upper and lower wire guides 8 and 12 which support the wire electrode 5 and arcuate portions (not shown) on the upper- or lower-course side of the supporting portions. The wire electrode 5, which is a soft one whose tensile strength is 46 kg/mm² or less, is liable to bend, and can readily undergo plastic deformation if it receives a drastic stress at the supporting portions and arcuate portions of the individual wire guides 8 and 12. Thereafter, the wire electrode 5 can be easily restored to a straight form by plastic deformation. Thus, during the large-taper cutting of the workpiece 20 disposed between the upper and lower wire guides 8 and 12, the linearity of the wire electrode 5, between the two wire guides 8 and 12, can be maintained, so that the workpiece can be machined into a high-accuracy taper shape. Since the amount of elastic deformation of the wire electrode 5, due to the bending at the supporting portion and arcuate portion of the upper wire guide 8, is small, the wire electrode 5 itself, supplied afterward to an electric discharge machining section, is subject to no bends, such as windings, and its linearity is maintained. Therefore, the gap or distance between the wire electrode 5 and the workpiece 20 is uniform, so that the electric discharge machining is stable, and the cutting surface roughness is improved.

A comparative experiment on a workpiece of 25-mm thickness was conducted for taper cutting for a taper angle of 30° , using a soft wire electrode with a wire diameter of 0.25 mm and a tensile strength of 42 kg/mm² to 46 kg/mm² and another wire electrode with the same wire diameter and a tensile strength of 50 kg/mm². Thereupon, the wire electrode with the tensile strength of 50 kg/mm² underwent a change of machining voltage of 6 V or more. On the other hand, the wire electrode with the tensile strength of 46 kg/mm² or less entailed a machining voltage change of only 2 V or thereabout, thus ensuring stable electric discharge machining.

As for the surface roughness of the tapered surface, moreover, the maximum surface roughness of the wire electrode with the tensile strength of 46 kg/mm² proved to be about 6 μ in terms of the top-to-bottom distance. Thus, an improvement in surface roughness of about 37 % was made as compared to the case of the machining with use of the wire electrode having the tensile strength of 50 kg/mm².

## Claims

1. A large-taper cutting method using a wire electric discharge machine wherein the taper angle is 20° or more and the electrode wire (5) extends between two opposed wire guides (8,12) the relative positions of which define said taper angle, and the wire guides (8,12) have wire supporting portions with arcuate wire bending portions about which the electrode wire (15) bends at the wire guides (8,12) at either end of a substantially straight portion, of the electrode wire (5), which extends between the wire guides (8,12), characterised in that the electrode wire (5) is a soft electrode wire which has a tensile strength in the range 37 kg/mm² to 46 kg/mm², and which is made of brass composed of substantially 63% to 67% Cu, with substantially the remainder being Zn.

## Patentansprüche

1. Großkegelbearbeitungsverfahren unter Verwendung einer Drahtelektroentladungsmaschine, wobei der Kegelwinkel 20° oder mehr beträgt und sich der Elektrodendraht (5) zwischen zwei entgegengesetzten Drahtführungen (8, 12), deren relative Positionen den Kegelwinkel definieren, erstreckt, und wobei die Drahtführungen (8, 12) Drahtstützabschnitte mit bogenförmigen Drahtbiegeabschnitten aufweisen, um welche sich der Elektrodendraht (5) an den Drahtführungen (8, 12) an jedem Ende eines sich zwischen den Drahtführungen (8, 12) erstrekkenden, im wesentlichen geraden Abschnitts des Elektrodendrahtes (5) biegt, dadurch gekennzeichnet, daß der Elektrodendraht (5) ein weicher Elektrodendraht ist, der eine Zugfestigkeit im Bereich von 37 Kg/mm² bis 46 Kg/mm² aufweist, und der aus Messing gefertigt ist, das aus im wesentlichen 63 % bis 67 % Cu, wobei im wesentlichen der Rest Zn ist, zusammengesetzt ist.

## Revendications

1. Procédé de coupe de conicités importantes utilisant une machine de décharge électrique à fil, dans lequel l'angle de conicité est de 20° ou plus et le fil d'électrode (5) s'étend entre deux guide-fils opposés (8, 12) dont les positions relatives définissent ledit angle de conicité, et dans lequel les guide-fils (8, 12) comportent des parties de support de fil présentant des parties courbes destinées à couder le fil et autour desquelles le fil d'électrode (5) est coudé dans les guide-fils (8, 12) à l'une et l'autre extrémité d'une partie essentiellement droite de fil d'électrode (5) qui s'étend entre les guide-fils (8, 12), caractérisé en ce que le fil d'électrode (5) est un fil d'électrode mou qui présente une résistance à la traction dans le domaine de 37 kg/mm² à 46 kg/mm² et qui est en laiton composé essentiellement de 63 % à 67 % Cu, le reste étant essentiellement Zn.